# EUROPEAN PATENT APPLICATION

(11) **EP 4 060 212 A1**
(43) Date of publication of application: **21.09.2022**
(21) Application number: 21163337.5
(22) Date of filing: 18.03.2021
(51) Int. Cl.: F16L 13/00, F16L 47/22, F16L 13/14

(54) **PIPE CONNECTION AND METHOD OF PRODUCING PIPE CONNECTION**

(71) Applicant: Uponor Innovation AB, 730 61 Virsbo (SE)
(72) Inventor: Clasen, Keith, Cannon Falls, MN 55009 (US); Stock, Rick, Farmington, MN 55024 (US); Cota, Tim, Lakeville, MN 55044 (US); Evans, Travis, Apple Valley, MN 55124 (US); Adelman, Duane, Lakeville, MN 55044 (US)
(74) Representative: Papula Oy

(57) **Abstract**

A pipe connection in the form of a shrinkage connection formed from a connecting piece (1) having a surface structure (11), and a pipe (2) having an inner diameter which is smaller than the outer diameter of the connecting piece (1), wherein the surface structure (11) of the connecting piece (1) comprises at least one radially projecting flange (12) and at least one circumferential groove (13a), the pipe (2) comprises a pipe end (21) which has been expanded in environmental temperature and connected to the connecting piece (1) by back-shrinkage. A sealing ring (3) is provided in the circumferential groove (13a), which sealing ring (3) has an annular profile having an inner surface, being engageable with a connecting piece (1) , and an outer surface, being engageable with the pipe (2), and the outer surface (32) comprises more than one annular ridge adjacent to each other in axial direction.

## Description

### TECHNICAL FIELD

The present invention relates to pipe connections and a method of producing such pipe connection.

### BACKGROUND

Plastic pipes are widely used in fluid, e.g. gas and water, supplying piping. Pipes are connected to each other by a connecting element, such as a pipe connector, which is connected to end of the pipes so that the connecting element is partly inserted inside each of the connected pipes. Commonly used plastic material of the pipes have so-called shape memory, which may be easily deformed and will try to return to their original shape after the deformation. For example, plastic pipes that are manufactured from cross-linked polyethylene possess an active memory capacity as low as room temperature. Such pipes are connected to each other by widening one end of the pipe and inserting into the widened pipe-end a flanged connector which forms part of the pipe connector. The pipe connector is retained in said pipe-end until the pipe has shrunk to an extent which it is able to firmly hold the pipe connector.

In low temperatures, the sealing process has required extended time to seal and during that time, one must wait before continuing to work with the piping assembly. It is possible that a finished pipe connection may not be achieved until after several hours and sometimes even after days. In some occasions, the sealing never occurs, and one must start the sealing process again and, in worst case, the pipes must be replaced with new ones before making the pipe connection again.

As known, each piping must be pressure tested and after successful pressure test, the piping may be put in use. The pressure test may be carried out only after the sealing has occurred, and the lower the installation temperature, i.e. environmental temperature, is, the longer it will take to seal. Below is a table for waiting times for cross-linked polyethylene pipes.

**Table 1. Waiting time in low temperatures**

| Installation temperature [°C] | Waiting time [h] |
|---|---|
| >+5 | 0,5 |
| 5 to 0 | 1,5 |
| 0 to -5 | 3 |
| -5 to -10 | 4 |
| -10 to -15 | 10 |

### OBJECTIVE OF THE INVENTION

The objective of the device is to alleviate the disadvantages mentioned above.

In particular, it is an objective of the present device to provide a pipe connection, which may be achieved in short period of time, i.e. shorten the seal time of the connection, and at the same time to reduce the never seal connections, i.e. connections that have imperfections that allow indefinite leaking, even in low environmental temperatures.

### SUMMARY

According to a first aspect, the present invention provides a pipe connection in the form of shrinkage connection formed from a connecting piece having a surface structure, and a pipe having an inner diameter which is smaller than the outer diameter of the connecting piece. The surface structure of the connecting piece comprises at least one radially projecting flange and at least one circumferential groove. The pipe comprises a pipe end which has been expanded in environmental temperature and connected to the connecting piece by back-shrinkage. A sealing ring is provided in the circumferential groove, which sealing ring has an annular profile having an inner surface, being engageable with a connecting piece, and an outer surface, being engageable with the pipe, and the outer surface comprises more than one annular ridge adjacent to each other in axial direction.

The advantage of the pipe connection is that the seal tight connection is formed even before the pipe-end has retracted back and interconnected with the connecting piece. Thus, the time for achieving the connection may be significantly reduced. At the same time, the number never seal connections are significantly reduced.

In an embodiment of the pipe connection, the circumferential groove with the sealing ring is further inside the pipe than at least one projected flange.

In an embodiment of the pipe connection, at least one projected flange is further inside the pipe than the circumferential groove with the sealing ring.

In an embodiment of the pipe connection, the outer surface of the connecting piece comprises at least two circumferential grooves with the sealing rings and the projected flange is provided between the circumferential grooves.

In an embodiment of the pipe connection, each annular ridge has a different diameter.

In an embodiment of the pipe connection, at least one annular ridge has a different diameter than rest of annular ridges.

In an embodiment of the pipe connection, each annular ridge has same diameter.

In an embodiment of the pipe connection, each annular ridge has diameter than the previous, in axial direction, adjacent annular ridge.

In an embodiment of the pipe connection, each annular ridge has smaller diameter than the previous, in axial direction, adjacent annular ridge.

In an embodiment of the pipe connection, the cross-sectional profile, along the axial direction, of each annular ridge have same shape.

In an embodiment of the pipe connection, the cross-sectional profile, along the axial direction, of annular ridges have different shapes.

In an embodiment of the pipe connection, the cross-sectional profile, along the axial direction, of at least one annular ridge comprises curved section and linear section.

In an embodiment of the pipe connection, tips of the annular ridges are curved or angled.

In an embodiment of the pipe connection, the sealing ring is fixed to the circumferential groove by adhesive.

In an embodiment of the pipe connection, the pip is made of material having memory properties.

In an embodiment of the pipe connection, the material is cross-linked polyethylene.

In an embodiment of the pipe connection, the pipe connection comprises a clamping ring around the pipe end, wherein the pipe end and the clamping ring have been reversibly expanded co-jointly and shrunk to the connecting piece by back-shrinkage during the pipe connection.

In an embodiment of the pipe connection, the clamping ring is made of same material as the pipe.

According to a second aspect, the present invention provides a method of producing a shrinkage connection in environmental temperature from a connecting piece having a surface structure comprising at least one radially projecting flange and at least one circumferential groove, a pipe end of a pipe having an inner diameter, which is smaller than the outer diameter of the connecting piece, and - a sealing ring having an annular profile having an inner surface, being engageable with a connecting piece, and an outer surface, being engageable with the pipe, and the outer surface comprises more than one annular ridge adjacent to each other in axial direction.

The shrinkage connection is achieved by assembling the sealing ring to the circumferential groove, expanding, at environmental temperature, the pipe end with the use of expanding mandrel to an inner diameter, which is than the outer diameter of the connecting piece, removing the expanding mandrel, moving the still expanded pipe end onto the connecting piece, whereby the pipe end, the sealing ring and the connecting piece are interconnected by back-shrinking of the expanded pipe end.

In an embodiment of the method, further providing a clamping ring around the pipe end, which pipe end and the clamping ring are reversibly expanded co-jointly and shrunk to the connecting piece by back-shrinkage.

In an embodiment of the method, the sealing ring is assembled to the circumferential groove manually.

In an embodiment of the method, the sealing ring is assembled to the circumferential groove by automation.

In an embodiment of the method, the sealing ring is assembled to the circumferential groove by overmolding.

It is to be understood that the aspects and embodiments of the invention described above may be used in any combination with each other. Several of the aspects and embodiments may be combined together to form a further embodiment of the invention.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
Fig. 1 shows a cross section of a pipe connection according to the invention,
**Fig. 2** is an end view of a sealing ring,
**Fig. 3** shows a side view of a sealing ring,
**Fig. 4 and 5** show two possible sealing ring designs,
**Fig. 6a to 6d** show few examples of different cross-sectional profiles, along the axial direction, i.e. the shape of annular ridges,
**Fig. 7 to 10** show few examples of connecting pieces with sealing ring, **and**
**Fig. 11** shows a pipe connection having a clamping ring around the pipe end.

### DETAILED DESCRIPTION

A connecting piece 1 is a tubular or a pipe-like connector, which may be used for connecting two or more pipes together while allowing fluid to flow through the pipe connector from one pipe to another. The pipe connector may also be used for connecting a pipe to some other source or destination of fluid than other pipe.

The pipe may be made of material that has shape memory, i.e. material which may be deformed, and which automatically strive to return essentially to their original shape. The material may be for example cross-linked polyethylene. The pipe may be ¼" (inch) to 4" pipe. Optionally, the pipe may be 3/8" to 3" pipe.

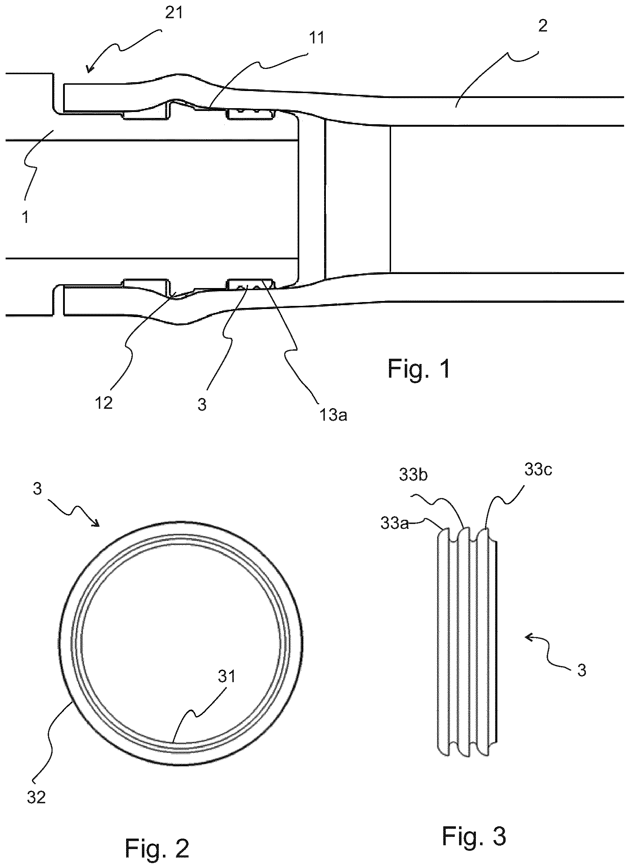

Figure 1 shows a cross section of a pipe connection in the form of shrinkage connection formed from a connection piece 1 and a pipe 2. The connecting piece 1 has a surface structure 11 on the outer surface which comprises at least one radially projecting flange 12 and at least one circumferential groove 13a, 13b,.... The pipe 2 comprises a pipe-end 21 which has been expanded in environmental temperature and connected to the connecting piece 1 by back-shrinkage. To fasten the pipe end 21 to the connecting piece 1, the inner diameter of the pipe 2, in unexpanded state, is smaller than the outer diameter of the connecting piece 1. To achieve leak-proof connection in short time, the pipe connection comprises a sealing ring 3, which is provided in the circumferential groove 13a, 13b,... of the connection piece 1 so that it forms fluid-tight sealing between the pipe 2 and the connecting piece 1, even before the pipe-end 21 has been completely retracted around the connecting piece 1. After the connection is complete, further sealing contact is obtained between the inner surface of the pipe 2 and the connecting piece 1, and in particular between the inner surface of the pipe 2 and the flange 12 of the connecting piece 1.

Figure 2 is an end view of a sealing ring 3. The sealing ring 3 has an annular profile having an inner surface 31 and an outer surface 32. The inner surface 31 is engageable with the connection piece 1 and the outer surface 32 is engageable with the pipe 2. As the sealing ring 3 is provided in the circumferential groove 13a, 13b,... of the connecting piece 1, the inner surface 31 of the sealing ring is engaged with the bottom of the circumferential groove 13a, 13b,... when the sealing ring 3 is assembled to its place. When assembled to the circumferential groove 13a, 13b,..., the sealing ring 3 may be additionally in connection to at least one side wall of the groove or it may be in connection with both side walls of the groove.

The sealing ring 3 is made of elastic material, for example silicone, thermoplastic elastomer, rubber (such as ethylene propylene diene monomer rubber EPDM or nitrile rubber NBR) or any elastomer. Optionally, the sealing ring is made of cross-linked polyethylene (PEX) material.

To ensure that the sealing ring 3 stays in the circumferential groove, the sealing ring 3 may be fixed to the circumferential groove 13a, 13b,... by an adhesive.

In figures, circumferential grooves comprise one sealing ring. However, two or more sealing rings may be provided in one circumferential groove.

Figure 3 shows a side view of a sealing ring 3. To achieve a proper sealing, the outer surface 32 of the sealing ring 3 comprises more than one annular ridge 33a, 33b,... adjacent to each other in axial direction. The annular ridge 33a, 33b,... is a section of the sealing ring 3 in axial direction, which has diameter than rest of the sealing ring 3. Figure 3 shows one possible design of the sealing ring 3, which comprises three annular ridges 33a, 33b,..., which are adjacent to each other in axial direction.

The circumferential groove 13a, 13b,... may be arranged on the connecting piece 1 so that, when the connection is completed, the circumferential groove 13a, 13b,... is further inside the pipe than the flange 12, as seen in figure 1. Optionally, the circumferential groove 13a, 13b,... may be arranged so that, when the connection is completed, the flange 12 is further inside the pipe than the circumferential groove 13a, 13b,.... Optionally, the connecting piece 1 comprises two circumferential grooves, which are arranged on both sides of the flange 12 in axial direction. In case of two circumferential grooves, at least one sealing ring 3 is provided in one of the circumferential grooves. Optionally, both circumferential grooves have sealing rings.

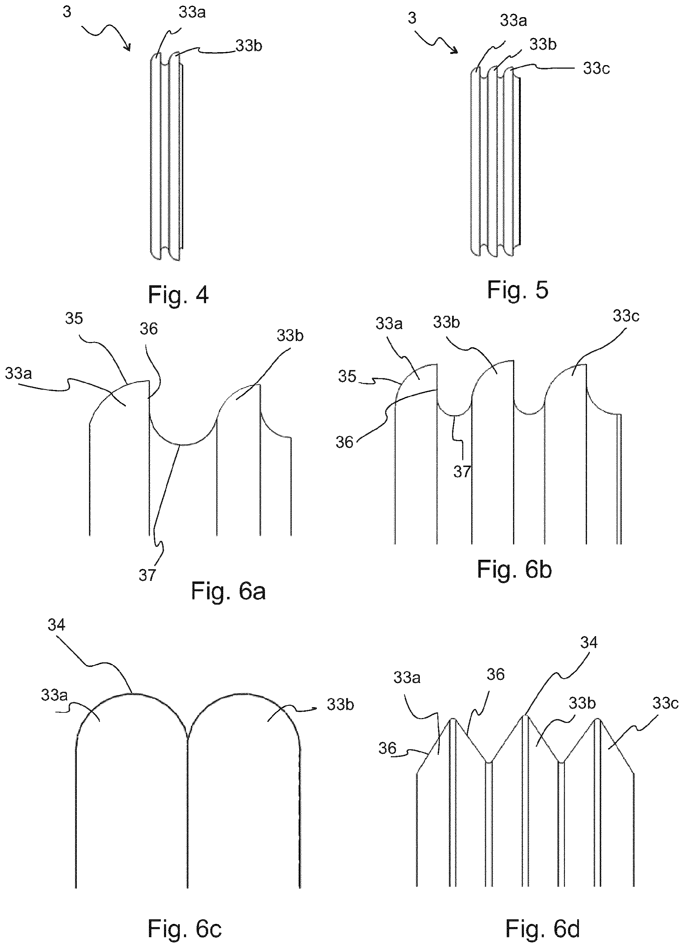

Figure 4 and 5 show two possible sealing ring designs. The sealing ring 3 in figure 4 has two annular ridges 33a, 33b,... which are arranged adjacent to each other in axial direction, and the sealing ring in figure 5 has three annular ridges 33a, 33b,... which are arranged adjacent to each other in axial direction. It should be noted that the sealing ring 3 may also have more than three annular ridges 33a, 33b,.... The diameter of each annular ridge 33a, 33b,... may be the same or, optionally, the diameter of each annular ridges 33a, 33b,... may be different. Optionally, at least one of the annular ridges 33a, 33b,... has different diameter than the rest of the annular ridges 33a, 33b,.... For example, each annular ridge 33a, 33b,... may have diameter than the previous, in axial direction, annular ridge, i.e. the diameters of annular ridges 33a, 33b,... increases, or the diameters of annular ridges 33a, 33b,... decreases in axial direction.

The cross-sectional profile, along the axial direction, i.e. the shape of the annular ridge may have different forms. Each of the annular ridges 33a, 33b,... may have the same shape or at least one of the annular ridges 33a, 33b,... may have different shape than the others. Optionally, each of the annular ridges 33a, 33b,... has different shape. It should be understood that any shape of the annular ridge described herein may be applied to any sealing rings of the description, e.g. regardless of the number or diameter of the annular ridges 33a, 33b,.... Each of annular ridges 33a, 33b,... may have the same or different shape than other annular ridges 33a, 33b,..., or some of the annular ridges 33a, 33b,... may have different shape than the others. Each annular ridge has a tip 34, i.e. the point of largest diameter. The cross-sectional profile of the tip 34 may be curved or angled. The dimensions of the shape may also vary.

The shape of the annular ridge may be fin-like, i.e. the cross-sectional profile has a curved section 35, i.e. convex section, and a linear section 36. The linear section 36 may be perpendicular to the axial direction of the sealing ring.

The shape of the annular ridge may be curved, i.e. the cross-sectional profile has a convex profile. For example, the convex profile may be semi-circular.

The shape of the annular ridge may be triangular, i.e. the cross-sectional profile has two linear sections 36, which are connected to each other at the tip 34 of the annular ridge, i.e. the tip 34 of the annular ridge is angled.

Figures 6a to 6d show few examples of different cross-sectional profiles, along the axial direction, i.e. the shape of annular ridges 33a, 33b,.... As noted above, these are not the only possible designs, but are shown merely to explain the different shapes more clearly. Figure 6a shows a cross-sectional profile of a sealing ring 3, which has two annular ridges 33a, 33b,.... Both annular ridges 33a, 33b,... have fin-like shape having a curved section 35 and a linear section 36, which linear section 36 is perpendicular to the axial direction of the sealing ring. The sealing ring may be provided in the connecting piece 1 so that the curved section 35 of the annular profile is deeper inside the pipe than the linear section 36, i.e. the curved section 35 is the leading section of the annular ridge. Optionally, the sealing ring may be provided in the connecting piece so that the linear section 36 of the annular profile is deeper inside the pipe than the curved section 35, i.e. the curved section 35 is the trailing section of the annular ridge.

Figure 6b shows a cross-sectional profile of a sealing ring, which has three annular ridges 33a, 33b,.... The shapes of the annular ridges 33a, 33b,... are fin-like having a curved section 35 and a linear section 36 as in figure 6a.

Figure 6c shows a cross-sectional profile of a sealing ring, which has two annular ridges 33a, 33b,.... Both annular ridges 33a, 33b,... are curved, i.e. they have convex profiles and the tip 34 is curved.

Figure 6d shows a cross-sectional profile of a sealing ring, which has three annular ridges 33a, 33b,.... All three annular ridges 33a, 33b,... have triangular profiles, i.e. profile has two linear sections 36 which are connected to each other at the tip 34 of the annular ridges 33a, 33b,... and the tips 34 are angled.

Each annular ridge may be connected to adjacent annular ridge directly, as seen for example in figures 6c and 6d, or a separate mid-section 37 may be provided between adjacent annular ridges 33a, 33b,..., as seen in figure 6a and 6b. The mid-section 37 may have curved profile, i.e. concave profile, or it may have linear profile.

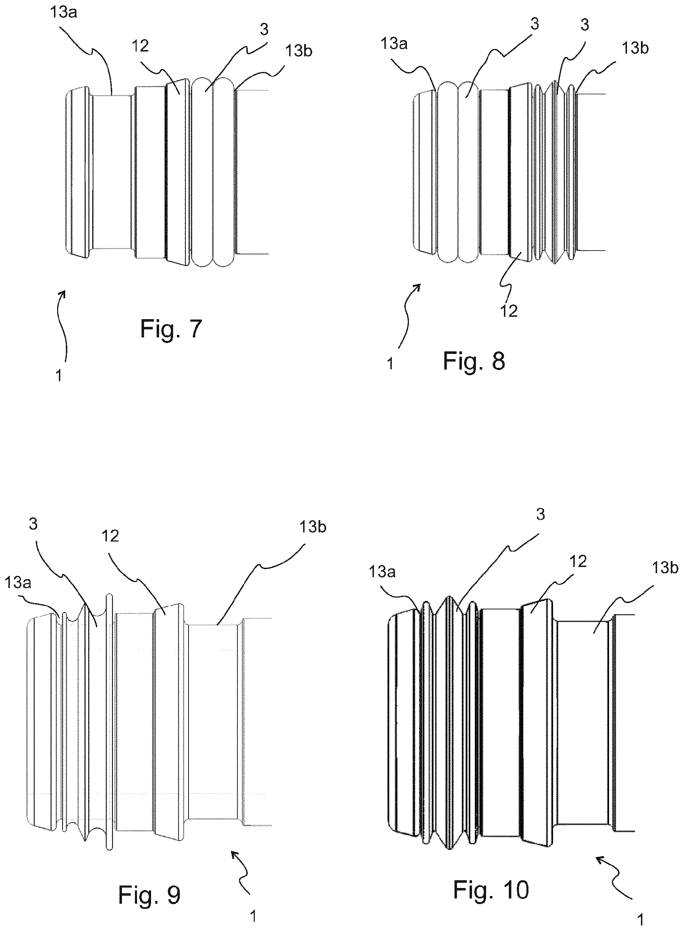

Figures 7 to 10 show few examples of connecting pieces with a sealing rings 3 or sealing rings. In these figures, the sealing rings have annular ridges 33a, 33b,... with different kind of shapes. However, it should be understood that the annular ridges 33a, 33b,... may have any kind of shape as explained above. And in cases where only one sealing ring is used, the connecting piece 1 may be provided with only one circumferential groove.

Figure 7 shows a connecting piece 1 with one sealing ring 3. The connecting piece 1 comprises two circumferential grooves 13a, 13b, which are arranged on separate sides of the flange 12 in axial direction. Only one of the circumferential grooves, the one which is behind the flange 12, has a sealing ring 3, i.e. the circumferential groove which is, in completed connection, deeper inside the pipe is without the sealing ring.

Figure 8 shows a connecting piece 1 with two sealing rings 3. The connecting piece 1 comprises two circumferential grooves 13a, 13b, which are arranged on separate sides of the flange 12 in axial direction. Both circumferential grooves 13a, 13b have sealing rings 3.

Figures 9 and 10 show a connecting piece 1 with one sealing ring 3. The connecting piece 1 comprises two circumferential grooves, which are arranged on separate sides of the flange 12 in axial direction. Only one of the circumferential grooves 13a, 13b,..., the one which is in front of the flange 12, has a sealing ring 3, i.e. the circumferential groove 13a which is, in completed connection, deeper inside the pipe is with the sealing ring 3. The annular ridges 33a, 33b,... of the sealing rings 3 in figure 13 and 14 have different shapes.

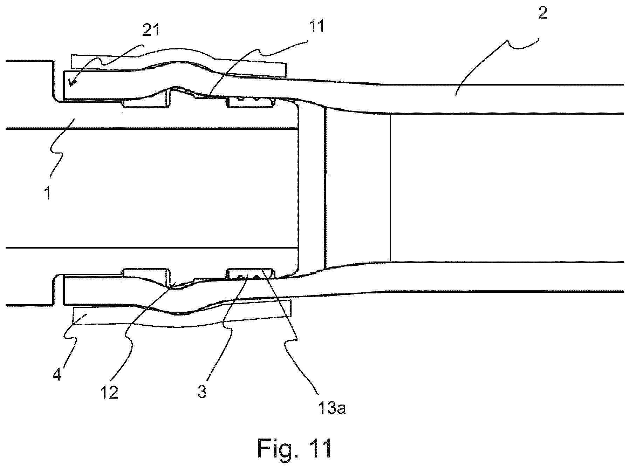

Figure 11 shows a pipe connection having a clamping ring 4 around the pipe end 21, wherein the pipe end 21 and the clamping ring 4 have been reversibly expanded co-jointly and shrunk to the connecting piece 1 by back-shrinkage during the pipe connection. The clamping ring 4 is made of material which is expendable as well as self-reconvertible at environmental temperature. The material may be the same material, from which the pipe 2 is made. The material may be for example cross-linked polyethylene.

The pipe connection is made in environmental temperature by producing a shrinkage connection. The shrinkage connection is achieved by assembling the sealing ring 3 to the circumferential groove 13a, 13b,... and expanding, at environmental temperature, the pipe end 21 with the use of expanding mandrel to an inner diameter, which is larger than the outer diameter of the connecting piece. The expanding mandrel is removed and the still expanded pipe end is moved onto the connection piece, whereby the pipe end 21, the sealing ring 3, and the connecting piece 1 are interconnected by back-shrinkage of the expanded pipe end 21.

Optionally, a clamping ring 4 may be provided around the pipe end, which pipe end and the clamping ring 4 are reversibly expanded co-jointly and shrunk to the connecting piece by back-shrinkage.

The sealing ring 3 may be assembled to the circumferential groove 13a, 13b,... manually or by automation or by overmolding.

Although the invention has been the described in conjunction with a certain type of device, it should be understood that the invention is not limited to any certain type of device. While the present inventions have been described in connection with a number of exemplary embodiments, and implementations, the present inventions are not so limited, but rather cover various modifications, and equivalent arrangements, which fall within the purview of prospective claims.

## Claims

1. A pipe connection in the form of a shrinkage connection formed from a connecting piece (1) having a surface structure (11), and a pipe (2) having an inner diameter which is smaller than the outer diameter of the connecting piece (1), wherein
- the surface structure (11) of the connecting piece (1) comprises at least one radially projecting flange (12) and at least one circumferential groove (13a, 13b,...),
- the pipe (2) comprises a pipe end (21) which has been expanded in environmental temperature and connected to the connecting piece (1) by back-shrinkage,
**characterized in that**
- a sealing ring (3) is provided in the circumferential groove (13a, 13b,...), which sealing ring (3) has an annular profile having an inner surface (31), being engageable with a connecting piece (1), and an outer surface (32), being engageable with the pipe (2), and the outer surface (32) comprises more than one annular ridge (33a, 33b,...) adjacent to each other in axial direction.

2. The pipe connection according to claim 1, wherein the circumferential groove (13a, 13b,...) with the sealing ring (3) is further inside the pipe (2) than at least one projected flange (12).

3. The pipe connection according to claim 1, wherein at least one projected flange (12) is further inside the pipe (2) than the circumferential groove (13a, 13b,...) with the sealing ring (3).

4. The pipe connection according to claim 1, wherein the outer surface (32) of the connecting piece (1) comprises at least two circumferential grooves (13a, 13b,...) with the sealing rings (3) and the projected flange (12) is provided between the circumferential grooves.

5. The pipe connection according to any of claims 1 to 4, wherein each annular ridge (33a, 33b,...)has a different diameter.

6. The pipe connection according to any of claims 1 to 4, wherein at least one annular ridge (33a, 33b,...) has a different diameter than rest of annular ridges.

7. The pipe connection according to any of claims 1 to 4, wherein each annular ridge (33a, 33b,...)has same diameter.

8. The pipe connection according to any of claims 1 to 5, wherein each annular ridge (33a, 33b,...)has larger diameter than the previous, in axial direction, adjacent annular ridge.

9. The pipe connection according to any of claims 1 to 5, wherein each annular ridge (33a, 33b,...) has smaller diameter than the previous, in axial direction, adjacent annular ridge.

10. The pipe connection according to any of claims 1 to 9, wherein the cross-sectional profile, along the axial direction, of each annular ridge (33a, 33b,...) have same shape.

11. The pipe connection according to any of claims 1 to 9, wherein the cross-sectional profile, along the axial direction, of annular ridges (33a, 33b,...) have different shapes.

12. The pipe connection according to any of claims 1 to 11, wherein the cross-sectional profile, along the axial direction, of at least one annular ridge (33a, 33b,...) comprises curved section (35) and linear section (36) .

13. The pipe connection according to any of claims 1 to 12, wherein tips (34) of the annular ridges (33a, 33b,...) are curved or angled.

14. The pipe connection according to any of claims 1 to 13, wherein the sealing ring (3) is fixed to the circumferential groove by adhesive.

15. The pipe connection according to any of claims 1 to 14, wherein the pipe (2) is made of material having memory properties.

16. The pipe connection according to claim 15, wherein the material is cross-linked polyethylene.

17. The pipe connection according to any of claims 1 to 16, wherein the pipe connection comprises a clamping ring (4) around the pipe end (21), wherein the pipe end (21) and the clamping ring (4) have been reversibly expanded co-jointly and shrunk to the connecting piece (1) by back-shrinkage during the pipe connection.

18. The pipe connection according to claim 17, wherein the clamping ring (4) is made of same material as the pipe (2).

19. A method of producing a shrinkage connection in environmental temperature from
- a connecting piece (1) having a surface structure (11) comprising at least one radially projecting flange (12) and at least one circumferential groove (13a, 13b,...),
- a pipe end (21) of a pipe (2) having an inner diameter, which is smaller than the outer diameter of the connecting piece (1), and
- a sealing ring (3) having an annular profile having an inner surface (31), being engageable with a connecting piece (1), and an outer surface (32), being engageable with the pipe (2), and the outer surface (32) comprises more than one annular ridge (33a, 33b,...) adjacent to each other in axial direction, wherein the shrinkage connection is achieved by
- assembling the sealing ring (3) to the circumferential groove (13a, 13b,...),
- expanding, at environmental temperature, the pipe end (21) with the use of expanding mandrel () to an inner diameter, which is larger than the outer diameter of the connecting piece (1),
- removing the expanding mandrel,
- moving the still expanded pipe end (21) onto the connecting piece (1), whereby the pipe end (21), the sealing ring (3) and the connecting piece (1) are interconnected by back-shrinking of the expanded pipe end (21).

20. The method of producing a shrinkage connection in environmental temperature according to claim 19, wherein
- providing a clamping ring (4) around the pipe end (21), which pipe end (21) and the clamping ring (4) are reversibly expanded co-jointly and shrunk to the connecting piece by back-shrinkage.

21. The method of producing a shrinkage connection in environmental temperature according to claim 19 or 20, wherein the sealing ring (3) is assembled to the circumferential groove (13a, 13b,...) manually.

22. The method of producing a shrinkage connection in environmental temperature according to claim 19 or 20, wherein the sealing ring (3) is assembled to the circumferential groove (13a, 13b,...) by automation.

23. The method of producing a shrinkage connection in environmental temperature according to claim 19 or 20, wherein the sealing ring (3) is assembled to the circumferential groove (13a, 13b,...) by overmolding.
